# EUROPEAN PATENT SPECIFICATION

(11) **EP 3 221 616 B1**
(45) Date of publication and mention of the grant of the patent: **28.11.2018**
(21) Application number: 15770943.7
(22) Date of filing: 29.09.2015
(51) Int. Cl.: F16H 59/04

(54) **GEARSHIFT UNIT FOR A TRANSMISSION OF A VEHICLE**
SCHALTEINHEIT FÜR EIN GETRIEBE EINES FAHRZEUGS
UNITÉ DE CHANGEMENT DE VITESSES POUR UNE TRANSMISSION D'UN VÉHICULE

(43) Date of publication of application: 27.09.2017
(73) Proprietor: Kongsberg Automotive AB, 565 33 Mullsjö (SE)
(72) Inventor: KRSTIC, Daniel, 412 53 Göteborg (SE); SALLE, Frédérik, 74490 Megevette (FR)
(74) Representative: Uexküll & Stolberg
(86) International application number: PCT/EP2015/072448
(87) International publication number: WO 2017/054848

(56) References cited:
- EP-A1- 0 137 941
- EP-A1- 0 225 211
- US-A1- 2002 066 296

## Description

The present invention relates to a gearshift unit for a transmission of a vehicle, the gearshift unit comprising a releasable blocking mechanism for blocking a shift lever from being moved to a shifting gate including the reverse gear, said blocking mechanism comprising a hollow shaft mounted around the shift lever to be slidable along a longitudinal direction of the shift lever, wherein an annular protrusion is projecting radially from the upper end of the hollow shaft, which annular protrusion may be grasped by a driver to lift the hollow shaft upwards towards a knob at the upper end of the shift lever to a release position in which the shift lever is free to be moved to the shifting gate including the reverse gear, wherein a helical spring is disposed within the hollow shaft and biasing it in downward direction to a blocking position in which a stop member of the hollow shaft blocks movement of the shift lever to the shifting gate including the reverse gear, wherein a spring holder fixed with respect to the shift lever supports one end of the spring which acts with its opposite end on the hollow shaft to urge it downwards.

A gearshift unit of this kind is disclosed in EP 0 225 211 A1. When a driver wants to change to the reverse gear he or she is grasping the annular protrusion with two fingers while the hand remains rested on the knob at the upper end of the shift lever. By pulling the annular protrusion upwards a stop member at the lower end of the hollow shaft is moved out of the way of a stationary blocking member such that the stop member may pass the blocking member and the shift lever may thus be moved to the shifting gate including the reverse gear. When the annular protrusion is lifted up to bring the hollow shaft to the release position, the upward movement is stopped by the annular protrusion coming into abutment on a lower rim of the knob attached to the upper end of the shift lever. When the annular protrusion strikes on the lower rim of the knob this on the one hand creates noise and on the other hand is accompanied by an abrupt stop of the hollow shaft. These effects are even more serious because the upper part of hollow shaft has to be made of a material of sufficient hardness to provide sufficient rigidity. Therefore, a clicking noise is generated when the annular protrusion is pulled upwards such that the hollow shaft reaches its released position. Also, the sudden stop of the hollow shaft in the release position when it strikes the lower rim of the knob is experienced as an unpleasant actuation feeling by the driver. Also a finger or parts of the skin of a finger can be clamped between the upper surface of the annular protrusion of the hollow shaft and the lower rim of the knob when the hollow shaft is pulled upwards.

It is an object of the present invention to provide a gear shift unit such that a blocking mechanism for blocking a shift lever from being moved to a shifting gate including the reverse gear can be actuated with a minimum of noise generated. In addition, the blocking mechanism should be arranged such that it can be actuated providing a pleasant actuation feeling.

This object is achieved by a gear shift unit comprising the features of claim 1. Preferred embodiments of the invention are set out in the dependent claims.

According to the present invention the spring holder is provided with an elastic end stop projecting radially with respect to the shift lever axis and extending into an opening in the wall of the hollow shaft. This opening is arranged such that a lower edge of the opening contacts the end stop when the hollow shaft approaches the release position to thereby smoothly stop movement of the hollow shaft at the released position.

In this manner the contact of the lower edge of the wall opening of the hollow shaft with the projecting end stop on the spring holder takes place at a location at a distance to the annular protrusion on the hollow shaft and the knob at the upper end of the shaft. Already for this reason any noise generated by this contact is less noticeable for the driver. In particular the opening in the wall of the hollow shaft can be located at a position such that it is surrounded by a gaiter in the assembled state of the gearshift unit which further reduces any noise noticeable for the driver. In addition, the material of the spring holder and the dimensions and shape of the end stop can be chosen such that the end stop elastically deforms when the hollow shaft approaches its release a position, to thereby smoothly slow down the upward movement of the hollow shaft.

In a preferred embodiment the spring holder is a clip with two arched legs for embracing and engaging a sleeve fixed on the shift lever. The arched legs are connected by an apex portion, and the end stop is formed by a tongue extending from the apex portion. For mounting the spring holder the two arced legs are elastically spread part to allow them to be moved over an attachment sleeve on the shift lever, whereafter the two arched legs elastically return or snap back to fix the clip with respect to the shift lever.

In a preferred embodiment the spring holder comprises a flange portion projecting in radial direction with respect to the shift lever longitudinal axis. In this manner the flange portion provides a support surface for one end of the helical spring that is resting on the flange portion, wherein an inner extension of the clip is extending axially downwards and is extending into a gap between an end portion of the spring and the shift lever. In this manner the spring holder on the one hand provides a support surface for absorbing forces of the spring acting in the direction of the longitudinal axis of the shift lever and of the spring. In addition the clip extension extending into the gap between the helical spring and the shift lever further supports the spring against movements in a direction perpendicular to the longitudinal axis of the shift lever by arranging the clip extension to extend into the small gap between the outer surface of the shift lever and the windings of the helical spring. This arrangement makes sure that the spring is held in place within the hollow shaft and prevents noise from being generated since the spring cannot be displaced such that it would hit the inner wall of the hollow shaft and create a rattling noise.

In a preferred embodiment the spring holder is integrally made of plastic material. Preferably the spring holder is made of thermoplastic polyurethane. Compared to other plastic materials thermoplastic polyurethanes can be provided with a rather low Shore A hardness. Therefore, the end stop may be arranged to be resilient. In this manner, the end stop can smoothly slow down the hollow shaft when it approaches its release position.

In a preferred embodiment the hollow shaft is in axial direction comprising an upper and a lower sleeve part connected to each other, wherein the upper and lower sleeve parts are made of different plastic materials. On the one hand, this two-part arrangement allows to assemble the hollow shaft on the shift lever after the spring holder has been fixed and the spring has been placed on the shift lever, and to connect the two parts to each other. On the other hand, the upper sleeve part can be made of a plastic material optimized with respect to structural rigidity, whereas the lower part can be made of a plastic material having a lower shore A hardness and higher elasticity. In this manner a better noise absorption may be achieved. During movements of the shift lever the lower sleeve part may hit the reverse wall of the base in which the shift lever is mounted. By selecting a softer material for the lower sleeve part the noise crated by such hits is reduced. For the upper sleeve part must be capable of absorbing higher loads. Therefore, this design with the hollow sleeve being assembled of separate upper and lower sleeve parts allows it to select suitable materials for the upper and lower sleeve parts independently from each other.

In a preferred embodiment the material of the upper sleeve part has a shore A hardness which is higher than the shore A hardness of the lower sleeve part.

In a preferred embodiment the upper sleeve part is made of polyoxymethylene and the lower sleeve part is made of thermoplastic polyurethane.

In a preferred embodiment the upper sleeve part and the lower sleeve part are connected by a bayonet connection which is closed when the upper and lower sleeve part are assembled on the shift lever.

In a preferred embodiment one of the upper and lower sleeve parts comprises a projection and the other of the upper and lower sleeve parts comprises a complementary recess, wherein projection and recess are arranged to come into engagement when the bayonet connection reaches the closed state such that the bayonet connection can only be opened again by breking the projection. This is a safety feature because if the connection between the upper and lower sleeve part is opened up and the projections is broken away the shift lever cannot be moved to R.

In a preferred embodiment the opening in the hollow shaft wall is formed in a lower end portion of the upper sleeve part. This implies that also the spring holder with its end stop projecting into the opening is located in the area of the lower end portion of the upper sleeve part. This lower end portion of the upper sleeve part is sufficiently spaced apart from the upper end of the upper sleeve part so that it can be located in a portion of the shift lever which is covered by a gaiter. In this manner any noise created by the contact between the end stop and the lower edge of the opening in the hollow shaft is further suppress by the surrounding gaiter.

The invention will now be described with reference to a preferred embodiment shown in the accompanying drawings in which:
Fig. 1 shows a perspective view of a part of a shift lever assembly of a gearshift unit according to the invention, a hollow shaft disposed on the shift lever;
Fig. 2 shows an exploded view of the parts of the hollow shaft, a spring holder and a spring;
Fig. 3 shows a perspective view of the spring holder; and
Fig. 4 shows cross-sectional views of the shift lever and the surrounding hollow shaft in the region of the spring holder and the spring, in a blocking position of the hollow shaft on the left hand side and in the upper release position of the hollow shaft on the shift lever on the right hand side.

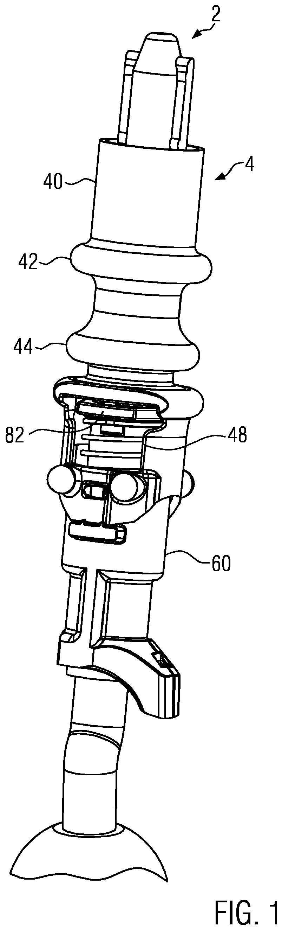

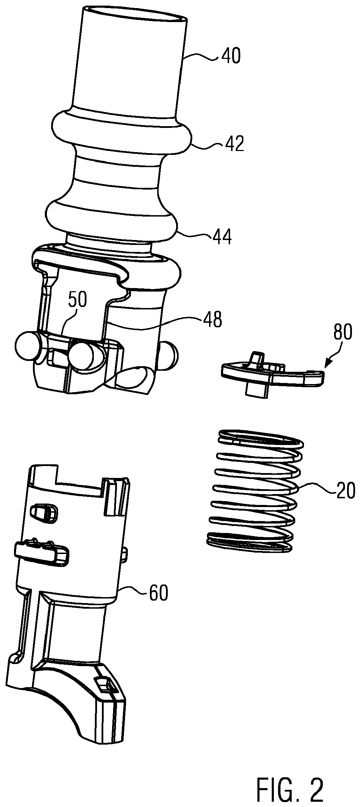

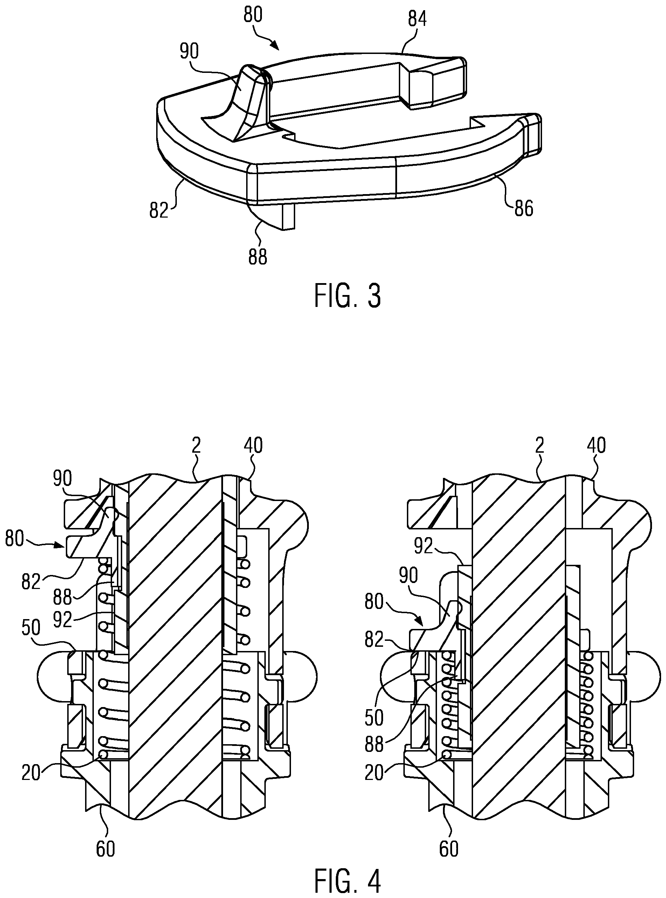

With reference to Figs. 1 and 2 the gearshift unit shown has a shift lever 2 around which a hollow shaft 4 is arranged. The gear shift unit further comprises a base (not shown) including a bearing portion (not shown) for receiving a ball portion of the shift lever to mount the shift lever for pivotal movements in a shift direction and in a select direction perpendicular to the shift direction. The hollow shaft 4 is slidable along the longitudinal axis of the shift lever 2. The hollow shaft 4 is urged to a lower blocking position of the hollow shaft on the shift lever 2 by a helical spring 20 (see Fig. 2 and 4) . The helical spring 20 is disposed within the hollow shaft 4 and is acting between the shift lever 2 and the hollow shaft 4 to bias it in downward direction towards the blocking position. More precisely, the helical spring is abutting with its upper end against a spring holder 80 which in turn is in engagement with a mounting sleeve 92 (see Fig. 4) fixed on the shift lever. The lower end of the helical spring 20 is resting on a shoulder formed on the inner wall of the hollow shaft, as can be seen in Fig. 4.

The hollow shaft 4 is provided with an annular or circumferential protrusion 42 close to its upper end. A driver can place two fingers on opposite sides of the hollow shaft 4 below the annular protrusion 42 to grasp the hollow shaft 4 and pull it towards a knob (not shown) at the upper end of the shift lever to move the hollow shaft 4 to a release position in which a blocking member at the lower end of the hollow shaft 4 is lifted such that the blocking member can pass by a stationary stop member in the base of the gearshift unit to allow to shift to R.

The hollow shaft has a second annular protrusion 44 such that a finger can be placed in the valley between the two annular protrusions 42, 44.

As can be seen in Fig. 2 the hollow shaft is formed by two separate parts, namely an upper sleeve part 40 and a lower sleeve part 60. The upper sleeve part 40 is preferably made of a hard plastic material such as polyoxymethylene in order to provide the upper shaft part 40 with sufficient structural rigidity. The lower shaft part 60 is preferably made of a softer plastic material, such as a thermoplastic polyurethane. In this manner any contacts between the lower shaft part 60 and structures of the base in which the shift lever unit is mounted create less noise since the lower shaft part 60 is of a rather soft plastic material. When the lower shaft part 60 has been pushed onto the shift lever, and the helical spring 20 and the spring holder 80 have been put into place, the upper shaft part 40 can be pushed onto the shift lever 2 and be connected to the lower shaft part 60 by a bayonet connection. Preferably, the upper shaft part 40 and the lower shaft part 60 include a couple of a projection and a recess which snap into engagement with each other when the bayonet connection reaches the closed state. The snap engagement of the projection and the recess is such that the bayonet connection can only be open again by breaking away the projection. Therefore, it is not possible to disconnect the upper and lower shaft parts 40, 60 once there have been mounted and connected, and if this is nevertheless achieved by sufficient force the broken projection ensures that the lower shaft part 60 is in a position such that shift lever movement to R is blocked.

The spring holder 80 is shown in more detail in Fig. 3. As can be seen the spring holder 80 is formed as a clip with two arched legs 84, 86 which are connected by an apex portion. The apex portion of the clip is provided with a radially extending end stop 82 which is extending from the apex portion of the clip in the opposite direction compared to the arched legs 84, 86. The arched legs 84, 86 and the apex portion of the clip have a certain radial extension with respect to the longitudinal axis of the shift lever, and thus form a flange portion projecting in radial direction to provide a support surface for the helical spring 20.

The clip further comprises an upper projection 90 which is received in a recess of the upper shaft part 40 when the hollow shaft is in its lower blocking position, as can be seen on the left hand side in Fig. 4. Opposite to the upper projection 90 there is an inner extension 88 which is formed as a thin, arched wall and which is arranged to extend in downward direction into a recess formed in the mounting sleeve 2 (see Fig. 4) fixed on the shift lever 2. In this manner the inner extension 88 extends downwardly into a gap between an upper end portion of the spring 20 and the mounting sleeve 90 fixed on a shift lever 2 (see Fig. 4). In this manner the inner extension 88 removes free play of the spring 20 on the shift lever such that movements of the spring in a direction perpendicular to the longitudinal axis of the shift lever are prevented or at least reduced to a large extend. In this manner the creation of noise which could be created by rattling of the spring is prevented or largely reduced.

The spring holder 80 is preferably integrally made of plastic material. In particular, the spring holder is preferably made of a soft plastic material such as thermoplastic polyurethane. This provides also the end stop 82 with the characteristics of a soft plastic material, which is preferred as will be described further below.

The mounting sleeve 92 is provided around the shift lever 2 in a level region where the spring holder 80 is to be fixed (the mounting sleeve 92 is shown in Fig. 4 only). The mounting sleeve 2 is provided with a recess for partially receiving the inner extension 88. By this engagement of the inner extension 88 in the recess in the mounting sleeve the spring holder 80 is engaged and fixed against movements in the direction of the longitudinal axis of the shift lever when the spring holder 80 is mounted on a mounting sleeve 92.

The spring holder 80 is mounted by urging the arched legs 84, 86 apart such that the spring holder can be pushed onto the mounting sleeve 92. The arched legs 84, 86 elastically return when the spring holder 80 is pushed further onto the mounting sleeve 92 until the inner extension 88 is partially received in the recess of the mounting sleeve 92. The engagement of the inner extension 88 and the recess in the mounting sleeve 2 fixes the spring holder 80 in axial direction of the shift lever 2, and the arched legs 84, 86 fix the spring holder 80 in radial direction.

As can be seen in Figs. 1 and 2 the upper shaft part 40 is in its lower end region provided with an opening 48. As can be seen on the left hand side in Fig. 4 which shows the hollow shaft 40, 60 in the lower blocking position the opening 48 is arranged such that the end stop 82 of the spring holder 80 is close to the upper edge of the opening 48. When the hollow shaft is lifted up with respect to the shift lever 2 to the upper release position, which is shown on the right hand side in Fig. 4, the opening 48 has moved relative to the stationary spring holder 80 such that the end stop 82 of the spring holder 80 has come into abutment on a lower edge 50 of the opening 48. Therefore, when the hollow shaft is lifted up with respect to the shift lever to the release position the end stop 82 of the spring holder 80 comes into abutment with the lower edge 50 of the opening 48 in the last phase of the movement and stops the movement of the hollow shaft at the predetermined release position. As already mentioned above the spring holder 80 is preferably made of a rather soft plastic material such as a thermoplastic polyurethane. Therefore, end stop 82 does not cause an abrupt stop when the release position of the hollow shaft is reached, but provides for a smooth stop, due to the soft material characteristics of end stop 82.

When the driver, after the hollow shaft has been brought to the upper release position, releases the annular protrusion 42 again by removing his or her fingers, the helical spring 20 urges the hollow shaft back in downward direction to the lower locking position of the hollow shaft, as shown on the left hand side in Fig. 4.

## Claims

1. A gearshift unit for a transmission of a vehicle, the gearshift unit comprising a releasable blocking mechanism for blocking a shift lever (2) from being moved to a shifting gate including the reverse gear, said blocking mechanism comprising a hollow shaft (4) mounted around the shift lever to be slidable along a longitudinal direction of the shift lever, wherein an annular protrusion (42) is projecting radially from the upper end of the hollow shaft, which annular protrusion (42) may be grasped by a driver to lift the hollow shaft upwards towards a knob at the upper end of the shift lever (2) to a release position in which the shift lever is free to be moved to the shifting gate including the reverse gear, wherein a helical spring (20) is disposed within the hollow shaft and biasing it in downward direction to a blocking position in which a stop member of the hollow shaft blocks movement of the shift lever to the shifting gate including the reverse gear, wherein a spring holder (80) fixed with respect to the shift lever supports one end of the spring (20) which acts with its opposite end on the hollow shaft (4) to urge it downwards, **characterized in that** the spring holder (80) is provided with an elastic end stop (82) projecting radially with respect to the shift lever axis and extending into an opening (48) of the wall of the hollow shaft, which opening (48) is arranged such that a lower edge (50) of the opening contacts the end stop (82) when the hollow shaft approaches the release position to smoothly stop movement of the hollow shaft at the release position.

2. The gearshift unit according to claim 1, **characterized in that** the spring holder (80) is a clip with two arched legs (84, 86) for embracing and engaging a sleeve fixed on the shift lever, which arched legs (84, 86) are connected by an apex portion, and that the end stop (82) is formed by a tongue extending from the apex portion.

3. The gearshift unit according to claim 2, **characterized in that** the clip of the spring holder (0) comprises a flange portion projecting in radial direction to provide a support surface for the spring, wherein an inner extension (88) of the clip is extending axially downwards and is extending into a gap between an end portion of the spring (20) and the outer wall of the shift lever (2).

4. The gearshift unit according to claim 2 or 3, **characterized in that** spring holder (80) is integrally made of plastic material.

5. The gearshift unit according to claim 4, **characterized in that** spring holder (80) is made of thermoplastic polyurethane.

6. The gearshift unit according to any of the prceeding claims, **characterized in that** the hollow shaft is in axial direction comprising an upper sleeve part (40) and a lower sleeve part (60) connected to each other, wherein the upper and lower sleeve parts are made of different plastic materials.

7. The gearshift unit according to claim 6, **characterized in that** the material of the upper sleeve part (40) has a Shore A hardness which is higher than the Shore A hardness of the lower sleeve part (60).

8. The gearshift unit according to claim 7, **characterized in that** the upper sleeve part (40) is made of polyoxymethylene and that the lower sleeve part (60) is made of thermoplastic polyurethane.

9. The gearshift unit according to any of claims 6 to 8, **characterized in that** the upper sleeve part (40) and the lower sleeve part (60) are connected by a bayonet connection.

10. The gearshift unit according to claim 9, **characterized in that** one of the upper and lower sleeve parts (40, 60) comprises a projection and the other of the upper and lower sleeve parts comprises a complementary recess, wherein projection and recess come into engagement when the bayonet connection reaches the closed state such that the bayonet connection can only be opened again by breaking the projection away.

11. The gearshift unit according to any of claims 6 to 10, **characterized in that** the opening (48) in the hollow shaft wall is formed in a lower end portion of the upper sleeve part (40).

## Patentansprüche

1. Schalteinheit für ein Getriebe eines Fahrzeugs, wobei die Schalteinheit einen freigebbaren Blockiermechanismus zum Blockieren einer Bewegung eines Schalthebels (2) zu einer den Rückwärtsgang enthaltenden Schaltgasse aufweist, wobei der Blockiermechanismus einen Hohlschaft (4) aufweist, der um den Schalthebel herum angebracht ist, um entlang einer Längsrichtung des Schalthebels gleitfähig zu sein, wobei ein ringförmiger Vorsprung (42) von dem oberen Ende des Hohlschafts radial vorsteht, wobei der ringförmige Vorsprung (42) von einem Fahrer gegriffen werden kann, um den Hohlschaft zu einem Knauf an dem oberen Ende des Schalthebels (2) nach oben in eine Freigabestellung anzuheben, in der der Schalthebel freigegeben ist, um in die Schaltgasse mit dem Rückwärtsgang bewegt zu werden, wobei eine Schraubenfeder (20) in dem Hohlschaft angeordnet ist und diesen in Richtung nach unten in eine Blockierstellung zu drücken, in der ein Stopperteil des Hohlschafts Bewegung des Schalthebels in die Schaltgasse mit dem Rückwärtsgang blockiert, wobei ein in Bezug auf den Schalthebel fixierter Federhalter (80) ein Ende der Feder (20) unterstützt, die mit ihrem gegenüberliegenden Ende auf den Hohlschaft (4) einwirkt, um ihn nach unten zu drücken, **dadurch gekennzeichnet, dass** der Federhalter (80) mit einem elastischen Endstopper (82) versehen ist, der in Bezug auf die Schalthebelachse radial vorsteht und in eine Öffnung (48) der Wand des Hohlschafts verläuft, wobei die Öffnung (48) so angeordnet ist, dass eine untere Kante (50) der Öffnung in Kontakt mit dem Endstopper (82) kommt, wenn der Hohlschaft sich der Freigabestellung nähert, um die Bewegung des Hohlschafts bei der Freigabestellung sanft zu stoppen.

2. Schalteinheit nach Anspruch 1, **dadurch gekennzeichnet, dass** der Federhalter (80) eine Klammer mit zwei bogenförmigen Schenkeln (84, 86) zum Umgreifen und Greifen einer Hülse ist, die an dem Schalthebel befestigt ist, wobei die bogenförmigen Schenkel (84, 86) durch einen Scheitelbereich verbunden sind, und dass der Endstopper (82) durch eine Zunge gebildet ist, die von dem Scheitelbereich vorsteht.

3. Schalteinheit nach Anspruch 2, **dadurch gekennzeichnet, dass** die Klammer des Federhalters (80) einen Flanschbereich aufweist, der in radialer Richtung vorsteht, um eine Stützfläche für die Feder bereitzustellen, wobei eine innere Verlängerung (88) der Klammer axial nach unten verläuft und in eine Lücke zwischen einem Endbereich der Feder (20) und der Außenwand des Schalthebels (2) verläuft.

4. Schalteinheit nach Anspruch 2 oder 3, **dadurch gekennzeichnet, dass** der Federhalter (80) einstückig aus Kunststoffmaterial hergestellt ist.

5. Schalteinheit nach Anspruch 4, **dadurch gekennzeichnet, dass** der Federhalter (80) aus thermoplastischem Polyurethan hergestellt ist.

6. Schalteinheit nach einem der vorhergehenden Ansprüche, **dadurch gekennzeichnet, dass** der Hohlschaft in axialer Richtung ein oberes Hülsenteil (40) und ein unteres Hülsenteil (60) aufweist, die miteinander verbunden sind, wobei die oberen und unteren Hülsenteile aus unterschiedlichen Kunststoffmaterialien hergestellt sind.

7. Schalteinheit nach Anspruch 6, **dadurch gekennzeichnet, dass** das Material des oberen Hülsenteils (40) eine Shore-A-Härte hat, die höher als die Shore-A-Härte des unteren Hülsenteils (60) ist.

8. Schalteinheit nach Anspruch 7, **dadurch gekennzeichnet, dass** das obere Hülsenteil (40) aus Polyoxymetylen hergestellt ist und dass das untere Hülsenteil (60) aus thermoplastischem Polyurethan hergestellt ist.

9. Schalteinheit nach einem der Ansprüche 6 bis 8, **dadurch gekennzeichnet, dass** das obere Hülsenteil (40) und das untere Hülsenteil (60) durch eine Bajonettverbindung miteinander verbunden sind.

10. Schalteinheit nach Anspruch 9, **dadurch gekennzeichnet, dass** eines von den oberen und unteren Hülsenteilen (40, 60) einen Vorsprung aufweist und das andere der oberen und unteren Hülsenteile eine komplementäre Aussparung, wobei Vorsprung und Aussparung in Eingriff miteinander kommen, wenn die Bajonettverbindung den geschlossenen Zustand erreicht, so dass die Bajonettverbindung nur durch Abbrechen des Vorsprungs wieder geöffnet werden kann.

11. Schalteinheit nach einem der Ansprüche 6 bis 10, **dadurch gekennzeichnet, dass** die Öffnung (48) in der Hohlschaftwand in einem unteren Endbereich des oberen Hülsenteils (40) gebildet ist.

## Revendications

1. Unité de changement de vitesses pour une transmission d'un véhicule, l'unité de changement de vitesses comprenant un mécanisme de blocage libérable pour empêcher un levier de vitesses (2) d'être déplacé vers une coulisse de changement de vitesses incluant la marche arrière, ledit mécanisme de blocage comprenant un arbre creux (4) monté autour du levier de vitesses pour être coulissant le long d'une direction longitudinale du levier de vitesses, dans laquelle une saillie annulaire (42) fait saillie radialement de l'extrémité supérieure de l'arbre creux, laquelle saillie annulaire (42) peut être saisie par un conducteur pour lever l'arbre creux vers le haut vers un bouton sur l'extrémité supérieure du levier de vitesses (2) dans une position de libération dans laquelle le levier de vitesses est libre d'être déplacé vers la coulisse de changement de vitesses incluant la marche arrière, dans laquelle un ressort hélicoïdal (20) est disposé dans l'arbre creux et l'inclinant dans la direction ascendante vers une position de blocage dans laquelle un élément d'arrêt de l'arbre creux bloque le mouvement du levier de vitesses vers la coulisse de changement de vitesses incluant la marche arrière, dans laquelle un support de ressort (80) fixé par rapport au levier de vitesses supporte une extrémité du ressort (20) qui agit avec son extrémité opposée sur l'arbre creux (4) pour le pousser vers le bas, **caractérisée en ce que** le support de ressort (80) est doté d'une butée d'extrémité élastique (82) faisant saillie radialement par rapport à l'axe de levier de vitesses et s'étendant dans une ouverture (48) de la paroi de l'arbre creux, laquelle ouverture (48) est agencée de sorte qu'une arête inférieure (50) de l'ouverture touche la butée d'extrémité (82) lorsque l'arbre creux approche la position de libération pour arrêter doucement le mouvement de l'arbre creux sur la position de libération.

2. Unité de changement de vitesses selon la revendication 1, **caractérisée en ce que** le support de ressort (80) est un clip avec deux branches arquées (84, 86) destinées à embrasser et mettre en prise un manchon fixé sur le levier de vitesses, lesquelles branches arquées (84, 86) sont raccordées par une portion de sommet, et que la butée d'extrémité (82) est formée par une languette s'étendant depuis la portion de sommet.

3. Unité de changement de vitesses selon la revendication 2, **caractérisée en ce que** le clip du support de ressort (0) comprend une portion de bride faisant saillie dans la direction radiale pour fournir une surface de support pour le ressort, dans laquelle une extension intérieure (88) du clip s'étend axialement vers le bas et s'étend dans une fente entre une portion d'extrémité du ressort (20) et la paroi extérieure du levier de vitesses (2).

4. Unité de changement de vitesses selon la revendication 2 ou 3, **caractérisée en ce que** le support de ressort (80) est réalisé d'un seul tenant en matériau plastique.

5. Unité de changement de vitesses selon la revendication 4, **caractérisée en ce que** le support de ressort (80) est réalisé en polyuréthane thermoplastique.

6. Unité de changement de vitesses selon l'une quelconque des revendications précédentes, **caractérisée en ce que** l'arbre creux est dans une direction axiale comprenant une partie de manchon supérieur (40) et une partie de manchon inférieur (60) raccordées l'une à l'autre, dans laquelle les parties de manchon supérieur et inférieur sont réalisées en différents matériaux plastiques.

7. Unité de changement de vitesses selon la revendication 6, **caractérisée en ce que** le matériau de la partie de manchon supérieur (40) présente une dureté Shore A qui est supérieure à la dureté Shore A de la partie de manchon inférieur (60).

8. Unité de changement de vitesses selon la revendication 7, **caractérisée en ce que** la partie de manchon supérieur (40) est réalisée en polyoxyméthylène et que la partie de manchon inférieur (60) est réalisée en polyuréthane thermoplastique.

9. Unité de changement de vitesses selon l'une quelconque des revendications 6 à 8, **caractérisée en ce que** la partie de manchon supérieur (40) et la partie de manchon inférieur (60) sont raccordées par une connexion à baïonnette.

10. Unité de changement de vitesses selon la revendication 9, **caractérisée en ce qu'**une des parties de manchon supérieur et inférieur (40, 60) comprend une saillie et l'autre des parties de manchon supérieur et inférieur comprend un évidement complémentaire, dans laquelle la saillie et l'évidement viennent en prise lorsque la connexion à baïonnette atteint l'état fermé de sorte que la connexion à baïonnette puisse seulement être ouverte de nouveau par rupture de la saillie.

11. Unité de changement de vitesses selon l'une quelconque des revendications 6 à 10, **caractérisée en ce que** l'ouverture (48) dans la paroi d'arbre creux est formée dans une portion d'extrémité inférieure de la partie de manchon supérieur (40).
